# EUROPEAN PATENT APPLICATION

(11) **EP 1 398 727 A1**
(43) Date of publication of application: **17.03.2004**
(21) Application number: 02717931.6
(22) Date of filing: 20.03.2002
(51) Int. Cl.: G06K 11/14

(54) **SURFACE ACOUSTIC WAVE TOUCH SCREEN WITHOUT INCREASING ITS THICKNESS AND LENGTH**

(30) Priority: 29.03.2001 CN 01214579; 30.01.2002 CN 02221458
(71) Applicant: Zhong, Dechao, Sichuan 610091 (CN)
(72) Inventor: Zhong, Dechao, Sichuan 610091 (CN)
(74) Representative: Cabinet Hirsch
(86) International application number: PCT/CN2002/000179
(87) International publication number: WO 2002/080092

(57) **Abstract**

A Non-adding thickness surface acoustic wave touch screen consists of a glass-made touch screen and transducers. Its features indicate that three angles of the touch screen 1 are beveled, the receiving transducer 3 and transmitting transducer 4 are mounted on the bevels; or the edges of three angles of the glass touch screen 1 are cut, the receiving transducer 3 and transmitting transducer 4 are mounted on the edges of the three cutting angles; or the receiving transducer 3 and transmitting transducer 4 are mounted on the edges of three angles of the glass touch screen 1. Since transducers have been mounted on the bevel angle, side corner and edger of the screen, they do not increase the thickness, dimension and length. This is very helpful for assembly.

## Description

### FIELD OF THE INVENTION:

The present invention relates to a computer screen displaying technology, and especially to a non-adding thickness surface acoustic wave touch screen.

### BACKGROUND OF THE INVENTION

In conventional surface acoustic wave touch screen, there is a vertical ultra sonic transmitting transducer and a horizontal ultra-sonic transmitting transducer, respectively, being fixed at the upper left corner and right lower corner of the touch screen, and there are two corresponding ultra sonic receiving transducers being mounted at the upper right corner. The reflecting strips X, with forty-five degree lined from sparse to dense and being separated precisely, are being curved at the four edges of the touch screen. Take Y-axes as an example, the transducer YS transfers the electric signals from a controller into ultra-sonic and emitting. Being design, the said transducer according a narrow angle direction in emits the ultra sonic energy toward left direction. During emitting process, the energy being reflected toward upper vertical direction by lower edge 45 degree reflecting strip 2. Then, it has been changed toward right to the YR transducer located at Y-axes by the upper reflecting strip 2. Finally, it has been changed into electric signals and reached to the controller.

The formation of the wave of the received signal is the same as consulting wave formation while the touch screen isn't being touched. When a finger touches screen, the finger absorbs a portion of wave energy and the controller detects that received signal become attenuated at certain moment. Then it can calculate the position of touch point on Y-axes. Due to same rational, the position of touch point on X axes can be detected. Besides the general touch screen can apply X-axes and Y-axes, the surface acoustic wave touch screen can accommodate the exclusively third Z-axes coordinate, that is, it can detect the magnitude of pressure from the user because the behind rational is to calculate the amount of attenuation that comes from transmitted signal at the location of decrease. Once three axes have been confirmed, controllers transfer their positions into computer. Since the surface acoustic wave is very stable, the controller of touch screen calculates the touching position by detecting the position of attention time at the time axes. So the surface acoustic wave touch screen is very stable, the precision is also very high.

However, whether in China and abroad, all manufacturers put receiving and transmitting transducers on the surface of screen's three angles. The shortcomings are: A. when there is a cover on the front of touch screen, transducers are vulnerable to be damaged and the screen is not good for assembly. B. Since transducers being mounted on the surface of screen, it increases the thickness of screen. This may not meet the requirements for whole machine assembly.

### SUMMARY OF THE INVENTION

The objective of the present invention is to provide a touch screen, which will not increase the thickness and dimension of the touch screen and offer the protection of transducer.

To achieve the above objective, the following methods being formed:

The present invention provides a non-adding thickness surface acoustic wave touch screen. It consists of a touch screen and some transducers. There are reflecting strips being curved at the four edges of said touch screen. The strips are composed by a 45-degree short slant line, which listed form sparse to dense. The sparse end reflecting stripes are vertical to receiving transducer and transmitting transducer. There is no transducer at dense end.

In accordance with above-mentioned touch screen, the processed locations of the touch screen are at the two sides of the top right angle, the right side of the bottom right angle and the upper side of the top left angle, or taking two sides of any angle of the touch screen and each side of two adjacent angles as processed locations. Mounting the receiving transducer and the transmitting transducer on the edges of the three angles.

Three angles of the said glass touch screen can be made into slant angles. The receiving transducer and transmitting transducer shall be installed on the slant angles. There, also, can cut of the rim of three angles and install the receiving and transmitting transducer on the rim of angles. The receiving and transmitting transducers can also be put on the side of the three angles

The advantage of the said invention is: since transducers have been mounted on the bevel angle, side corner and edger of the screen, they do not increase the thickness, dimension and length. This is very helpful for assembly.

### BRIEF DESCRIPTION OF THE DRAWINGS

Figure 1 shows the location of the transducers of the present invention.
Figure 2 shows the location of the transducers fixed on the bevels.
Figure 3 shows the location of the transducers fixed on the edges of the cutting angle.
Figure 4 shows the location of the transducers fixed on the edges of the angle.
Wherein, 1 is the touch screen of the present invention, 2 is the reflecting strip, 3 is the receiving transducer and 4 is transmitting transducer.

### DETAILED DESCRIPTION OF PREFERRED EMBODIMENTS

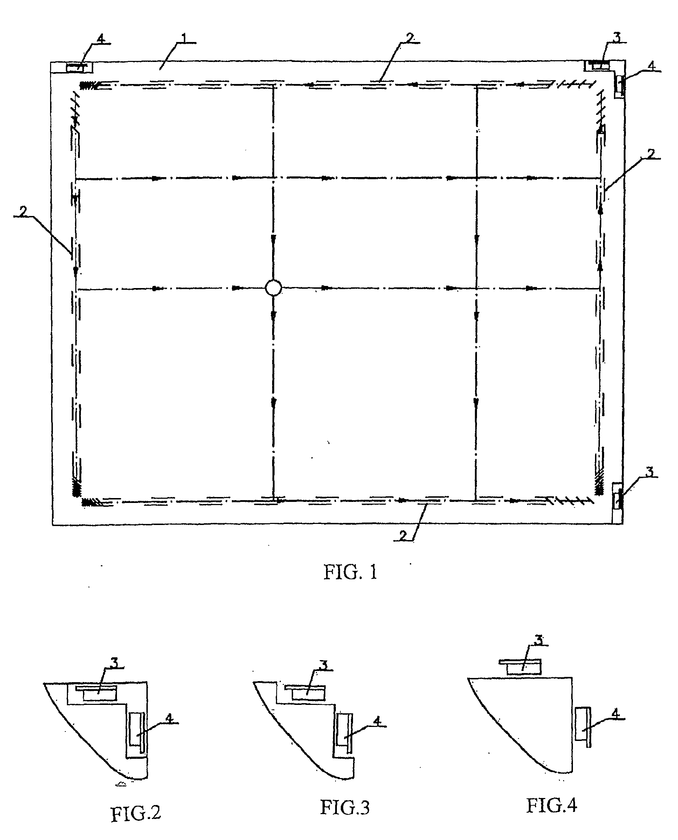

As showed in Figure 1 and Figure 2, using glass cold processing techniques to abrade and bevel the three corners of the touch screen, installing the receiving transducers 3 and the transmitting transducers 4 on the bevels,

The theory of this embodiment is: the formation of the wave of the received signal is the same as consulted wave formation while the screen 1 isn't being touched. When a finger or other input touches the screen, the finger absorbs a portion of wave energy. The transmitting transducer 4 that close to touching point transfers electric signal controlled by controller into ultrasonic wave and transmits. The ultrasonic goes along with reflecting strips 2 following arrow directions showing on Figure 2 and emitting to receiving transducer 3. Finally, transducer 3 absorbs the signal and passes it to controller of touch system via touch screen line. Controller, then, analyzes the signal.

Another one embodiment, showed in Figure 3, is to use glass cold processing techniques to cut the edges of three corners of the touch screen 1, installing the receiving transducer 3 and the transmitting transducer 4 on the edges of the cutting angle.

Further another embodiment, showed in Figure 4, is to put receiving transducer 3 and transmitting transducer 4 on the edges of three corners of the glass-made surface acoustic wave touch screen 1.

According to the installation of transducers, the locations that need to be abraded are, two sides of the top right corner, the right side of the bottom right corner and the upper side of top right corner, or two sides of any corner of the touch screen, each side of two adjacent corners. The opposite angle of two processed sides of the angle and one side of the two angles near the opposite angle don't need to be processed.

### UTILITY IN INDUSTRY

The present invention put transducers on the bevel angle, side corner and edger of the screen. They do not increase the thickness; dimension and length. This is very helpful for assembly and can be applied to industry.

## Claims

1. A non-adding thickness surface acoustic wave touch screen including:
a touch screen and transducers mounted on the said touch screen, on which there are fixed reflecting streaks to the four sides of the glass-made touch screen;
wherein the short slope lines, between which the interval is from sparse to dense, with an angle of 45 degrees comprise the reflecting streak 2 on the touch screen 1; the said transducers are located at the sparse ends of reflecting streaks 2, and the angle between the receiving transducer 3 and the transmitting transducer 4 is 90 degrees whereas there is no transducer at the dense ends.

2. The non-adding thickness surface acoustic wave touch screen of claim 1, wherein the processed locations of the touch screen are at the two sides of the top right angle, the right side of the bottom right angle and the upper side of the top left angle, or taking two sides of any angle of the touch screen and each side of two adjacent angles as processed locations, beveling these three angles of the touch screen 1 and mounting the receiving transducer 3 and the transmitting transducer 4 on the bevels.

3. The non-adding thickness surface acoustic wave touch screen of claim 2, wherein the three angles of the touch screen 1 are abraded and beveled to three edges, and mounting the receiving transducer 3 and the transmitting transducer 4 on the edges of the bevel angles.

4. The non-adding thickness surface acoustic wave touch screen of claim 2, wherein the edges of three corners of the touch screen 1 are cut, mounting the receiving transducer 3 and the transmitting transducer 4 on the edges of the cutting angles.

5. The non-adding thickness surface acoustic wave touch screen of claim 2, wherein the receiving transducer 3 and transmitting transducer 4 are put on the edges of three processing corners of the touch screen 1.
